# EUROPÄISCHE PATENTSCHRIFT

(11) **EP 4 184 782 B1**
(45) Veröffentlichungstag und Bekanntmachung des Hinweises auf die Patenterteilung: **26.08.2026**
(21) Anmeldenummer: 22200992.0
(22) Anmeldetag: 12.10.2022
(51) Int. Cl.: H02P 1/46, H02P 6/26

(54) **BETRIEB EINES ANTRIEBSSYSTEMS MIT EINEM EINPHASEN-SYNCHRONMOTOR**
OPERATING A DRIVE SYSTEM WITH A SINGLE-PHASE SYNCHRONOUS MOTOR
FONCTIONNEMENT D'UN SYSTÈME D'ENTRAÎNEMENT COMPRENANT UN MOTEUR SYNCHRONE MONOPHASÉ

(30) Priorität: 17.11.2021 DE 102021129993
(43) Veröffentlichungstag der Anmeldung: 24.05.2023
(73) Patentinhaber: Miele & Cie. KG, 33332 Gütersloh (DE)
(72) Erfinder: Sammoud, Hafedh, 8090 Kelibia (TN)

(56) Entgegenhaltungen:
- DE-A1- 102019 110 045
- US-A1- 2012 019 180

## Beschreibung

Die Erfindung betrifft ein Verfahren zum Betrieb eines Antriebssystems mit einem Einphasen-Synchronmotor gemäß dem Patentanspruch 1, ein Antriebssystem zur Ausführung eines derartigen Verfahrens gemäß dem Patentanspruch 13, eine Haushaltsgerätekomponente mit einem derartigen Antriebssystem gemäß dem Patentanspruch 14 sowie ein Haushaltsgerät mit einer derartigen Haushaltsgerätekomponente gemäß dem Patentanspruch 15.

Zu den bekannten elektrischen Motoren gehören auch die Synchronmotoren, welche einphasig mit Wechselstrom oder mehrphasig mit Drehstrom betrieben werden können. In jedem Fall wird ein konstant magnetisierter Läufer verwendet, welcher auch als Rotor bezeichnet werden kann. Hierzu können Permanentmagnete oder eine elektromagnetische Fremderregung verwendet werden. Die Bezeichnung Synchronmotor resultiert daraus, dass der Rotor von einem bewegten magnetischen Drehfeld im Ständer, auch Stator genannt, synchron mitgenommen wird. Somit weist der Synchronmotor im Betrieb eine zur Wechselspannung synchrone Bewegung auf, dessen Drehzahl über die Polpaarzahl des Stators des Synchronmotors mit der Frequenz der Wechselspannung verknüpft ist.

Mehrsträngige Permanentmagnet-Synchronmotoren werden üblicherweise über einen Frequenzumrichter betrieben, wodurch ein geregelter Betrieb ermöglicht wird, indem Drehrichtung, Drehzahl und Drehmoment des Synchronmotors über die Frequenz und Amplitude der Ausgangswechselspannung des Frequenzumrichters vorgegeben werden können. Dies kann das Drehverhalten des Synchronmotors z.B. beim Anlauf sowie in Abhängigkeit der anzutreibenden Last gezielt beeinflussen.

Dabei wird bei der Ansteuerung eines geregelten einphasigen Synchronmotors üblicherweise ein Sensor zur Ermittlung der Rotorlage benötigt, mit dessen Hilfe sich die gewünschten Kommutierungszeitpunkte ermitteln lassen.

Nachteilig hieran ist jedoch, dass ein derartiger Rotorlagesensor mit Mehrkosten verbunden ist. Weiterhin muss ein zusätzlicher Bauraum für den Rotorlagesensor vorgehalten werden. Auch weist die Verdrahtung bzw. die Verschaltung des Rotorlagesensors eine hohe Komplexität auf, was ebenfalls den Herstellungsaufwand erhöhen und bzw. oder eine Quelle für Fehlfunktionen darstellen kann.

Um die Rotorlage eines geregelten einphasigen Synchronmotors auch ohne die Verwendung eines Rotorlagesensors bestimmen und hierdurch die zuvor beschriebenen Nachteile des Rotorlagesensors vermeiden zu können, ist es bekannt, die Rotorlage ohne entsprechenden Rotorlagesensor zu ermitteln.

Die DE 10 2019 110 045 A1 beschreibt ein Verfahren zum Betrieb eines Antriebssystems mit einem Einphasen-Synchronmotor mit wenigstens den Schritten:
- Betreiben des Einphasen-Synchronmotors mit einer ersten elektrischen Frequenz einer Referenzspannung,
- Unterbrechen des Betriebs des Einphasen-Synchronmotors für einen Messzeitraum, wobei der Messzeitraum einen Nulldurchgang eines Motorstroms einschließt,
- innerhalb des Messzeitraums zum Zeitpunkt des Nulldurchgangs des Motorstroms, Erfassen einer induzierten Spannung,
- Vergleichen der erfassten induzierten Spannung mit einem Sollwert der induzierten Spannung und
- erneutes Betreiben des Einphasen-Synchronmotors mit einer zweiten elektrischen Frequenz der Referenzspannung in Abhängigkeit des Ergebnisses des Vergleichens.

Nachteilig an dem Verfahren der DE 10 2019 110 045 A1 ist, dass dieses Verfahren erst ab einer minimalen Frequenz einsetzbar ist.

Nachteilig ist auch, dass der Einphasen-Synchronmotor in einem gesteuerten Betrieb (Open-Loop-Betrieb) gestartet und dann in den Betrieb einer geschlossenen Phasenreglerschleife (Closed-Loop-Betrieb) umgeschaltet werden muss, d.h. ein Anlauf in einer geschlossenen Phasenreglerschleife ist nicht möglich. Dadurch reagiert der Einphasen-Synchronmotor empfindlich auf äußere Einflüsse und kann in seinem Anlauf gestört werden. Dies kann zu einem Abbruch des Hochlaufes führen. Dieses Antriebssystem ist daher nur eingeschränkt robust.

Die DE 10 2013 218 041 A1 beschreibt ein Verfahren zum Betreiben eines einen Stator und einen relativ zu diesem drehbaren Rotor aufweisenden Einphasen-Elektromotors, gemäß welchem die Relativposition des Rotors relativ zum Stator durch Bestimmen der in der Statorspule des Stators erzeugten elektromotorischen Rückstellkraft (BEMF) bestimmt wird, umfassend die folgenden Schritte:
- Abschalten des elektrischen Statorstroms für die Dauer einer einstellbaren ersten Totzeit,
- Nach Ablauf der ersten Totzeit und bei weiterhin abgeschalteter Bestromung: Bestimmen des Zeitpunkts eines Nulldurchgangs der elektromotorischen Rückstellkraft (BEMF) und somit des in der Statorspule induzierten elektrischen Stroms,
- Nach dem Feststellen eines solchen Nulldurchgangs der elektromotorischen Rückstellkraft (BEMF): Kommutieren der Bestromung der Statorspule nach Ablauf einer einstellbaren zweiten Totzeit.

Nachteilig an dem Verfahren der DE 10 2013 218 041 A1 ist, dass die Bestromung für eine gewisse Zeit (in der Software vorgegebene Zeit) erfolgt und überwacht wird, wann die BEMF einen Nulldurchgang erfährt. Zu diesem Zeitpunkt erfolgt die Kommutierung des Einphasen-Elektromotors. Dabei muss jedoch sichergestellt sein, dass der Rotor über 90° aber nicht über 180° bewegt wird. Bei schwergängigem Rotor oder bei einem zu leichtgängigen Rotor bzw. bei einer Änderung des Lastmoments kann der Kommutierungszeitpunkt verfehlt werden bzw. kann der Rotor blockieren und die Ansteuerung außer Tritt fallen. Dann ist das Verfahren der DE 10 2013 218 041 A1 nicht anwendbar.

Aus der US 2012019180 A1 ist ein Verfahren zum Starten eines einphasigen Synchronmotors mit Permanentmagneten bekannt, das einfach und kostengünstig umsetzbar ist, wobei das Verfahren einen Schritt zum Anwenden einer Steuerlogik des Schalters umfasst, die eine erste und eine zweite Bedingung zum Einschalten bereitstellt, wobei die erste Bedingung überprüft wird, wenn ein erfasstes Gegen-EMK-Signal das gleiche Vorzeichen wie ein elektrisches Netzspannungssignal hat, wobei die zweite Bedingung überprüft wird, wenn das Gegen-EMK-Signal das gleiche Vorzeichen wie sein erster Ableitungswert hat.

Aus der DE 102019110045 A1 ist ein Verfahren zum Betrieb eines Antriebssystems mit einem Einphasen-Synchronmotor bekannt, mit wenigstens den Schritten: Betreiben des Einphasen-Synchronmotors mit einer ersten elektrischen Frequenz einer Referenzspannung, Unterbrechen des Betriebs des Einphasen-Synchronmotors für einen Messzeitraum, wobei der Messzeitraum einen Nulldurchgang eines Motorstroms einschließt, innerhalb des Messzeitraums zum Zeitpunkt des Nulldurchgangs des Motorstroms, Erfassen einer induzierten Spannung, Vergleichen der erfassten induzierten Spannung mit einem Sollwert der induzierten Spannung und erneutes Betreiben des Einphasen-Synchronmotors mit einer zweiten elektrischen Frequenz der Referenzspannung in Abhängigkeit des Ergebnisses des Vergleichens.

Der Erfindung stellt sich somit das Problem, ein Verfahren zum Betrieb eines Antriebssystems mit einem Einphasen-Synchronmotor der eingangs beschriebenen Art bereitzustellen, so dass die Möglichkeiten zum Betrieb des Antriebssystems erweitert werden können. Insbesondere soll auf die Verfahren der DE 10 2019 110 045 A1 und der DE 10 2013 218 041 A1 aufgebaut und diese verbessert werden, insbesondere sollen deren zuvor genannten Nachteile überwunden werden. Dies soll möglichst einfach, kostengünstig und bzw. oder verlässlich erfolgen. Zumindest soll eine Alternative zu bekannten Verfahren zum Betrieb eines Antriebssystems mit einem Einphasen-Synchronmotor geschaffen werden.

Erfindungsgemäß wird dieses Problem durch ein Verfahren mit den Merkmalen des Patentanspruchs 1, durch ein Antriebssystem mit den Merkmalen des Patentanspruchs 13, durch eine Haushaltsgerätekomponente mit den Merkmalen des Patentanspruchs 14 sowie durch ein Haushaltsgerät mit den Merkmalen des Patentanspruchs 15 gelöst. Vorteilhafte Ausgestaltungen und Weiterbildungen der Erfindung ergeben sich aus den nachfolgenden Unteransprüchen.

Somit betrifft die vorliegende Erfindung ein Verfahren zum Betrieb eines Antriebssystems mit einem Einphasen-Synchronmotor mit wenigstens den Schritten:
- Bestromen eines Stators des Einphasen-Synchronmotors mit einer Motorspannung mit einem vorbestimmten Vorzeichen, bis ein vorbestimmter Stromschwellwert eines Motorstroms des Stators oder eine vorgegebene Einschaltzeit erreicht ist,
- Beenden des Bestromens,
- kontinuierliches Erfassen des Motorstroms des Stators,
- im Bereich des Nulldurchgangs des Motorstroms, Erfassen einer induzierten Spannung des Stators,
- Bestimmen des Vorzeichens der induzierten Spannung, und
- falls das Vorzeichen der induzierten Spannung das entgegengesetzte Vorzeichen des vorbestimmten Vorzeichens der Motorspannung ist, Wechseln des vorbestimmten Vorzeichens der Motorspannung auf das Vorzeichen der induzierten Spannung.

Mit anderen Worten kann erfindungsgemäß ein Bestromen des Stators in einem gewissen vorbestimmten Maße erfolgen, so dass seitens des Stators eine entsprechende Spannung im Rotor induziert werden kann. Wird nun das Bestromen des Stators beendet, klingen zum einen der Motorstrom und zum anderen die Spannung im Rotor ab. Die Spannung des Rotors induziert jedoch weiterhin auch eine Spannung im Stator, welche dann, wenn der Motorstrom vollständig abgeklungen und Null ist, als induzierte Spannung des Stators erfasst werden kann. Zu beachten ist dabei, dass Motorspannung und Motorstrom immer das gleiche Vorzeichen besitzen.

Der Bereich des Nulldurchgangs des Motorstroms kann erfindungsgemäß im Wesentlichen dem exakten Nulldurchgang entsprechen, aber auch von dem exakten Nulldurchgang in einem gewissen Maß abweichen. Bevorzugt ist die maximale Abweichung vom exakten Nulldurchgang +-50%, bezogen auf die Amplitude der EMK, oder +-30 Grad, bezogen auf den elektrischen Winkel, besonders bevorzugt +-25% bzw. +-15 Grad.

Grundlegend dabei ist die elektrische Drehfrequenz, also die mechanische Drehfrequenz des Antriebs multipliziert mit der Polpaarzahl p des Motors. In einem beispielhaften Fall sei p=1, d.h. mechanische und elektrische Frequenz sind identisch. Bei z.B. einer Drehzahl von 3000 Upm ist f_el = 50 Hz (T_el = 20 ms). Eine Abweichung von +-50 % der Amplitude ergibt eine Abweichung von +-30° elektrisch in der Zeit (bei einem Referenzwert von 50% der Amplitude der induzierten Spannung entsteht eine Phase von 30° zwischen Strom und EMK, sin (30°) = 0.5). Die Periodendauer ist in dem Beispiel T_el = 20 ms. +-30° elektrisch * 20 ms ergibt ca. +-1,7 ms. Das ist ein Beispiel für 50 Hz (also hier bei p=1 bei 3000 Upm).

Aus dem Vorzeichen der erfassten induzierten Spannung des Stators kann nun im Vergleich zum vorbestimmten Vorzeichen der Motorspannung erkannt werden, ob diese gleich sind oder nicht. Sind die Vorzeichen von induzierter Spannung des Stators und vorgegebener Motorspannung gleich, erfolgt das Betreiben des Einphasen-Synchronmotors bzw. die Bewegung des Rotors in der gewünschten Drehrichtung, welche durch das vorbestimmte Vorzeichen vorgegeben werden. Somit kann der Betrieb in dieser Form fortgesetzt werden. Andernfalls ist das vorbestimmte Vorzeichen der Motorspannung umzudrehen.

Im Gegensatz zum Verfahren der DE 10 2019 110 045 A1 ist das erfindungsgemäße Verfahren ab Stillstand des Rotors, d.h. ab der Drehzahl Null, anwendbar. Vorzugsweise ist vorher der Rotor auszurichten, wie weiter unten näher beschrieben werden wird.

Im Gegensatz zum Verfahren der DE 10 2013 218 041 A1 wird bei dem erfindungsgemäßen Verfahren innerhalb einer elektrischen Periode des Motors kontinuierlich die induzierte Spannung des Stators, d.h. die EMK bzw. die BEMF, abgetastet. Dadurch kann mittels des erfindungsgemäßen Verfahrens der Einphasen-Synchronmotor geregelt gestartet werden. Entsprechend kann ein sensorloser geregelter Anlauf des Rotors mit höherer Massenträgheit, z.B. bei einem Lüfter, ebenso erfolgen wie bei Anwendungen mit geringerer Massenträgheit.

Gemäß einem Aspekt der Erfindung entspricht das vorbestimmte Vorzeichen der Motorspannung einer gewünschten Drehrichtung eines Rotors des Einphasen-Synchronmotors. Entsprechend kann über die Vorgabe des Vorzeichens der Motorspannung die Drehrichtung des Rotors vorgegeben werden.

Gemäß einem weiteren Aspekt der Erfindung weist das Antriebssystem keinen Sensor zur Erfassung der Lage eines Rotors des Einphasen-Synchronmotors auf. Durch diesen Verzicht auf einen Rotorlagesensor können die eingangs beschriebenen Nachteile vermieden werden. Die Berücksichtigung der Rotorlage kann dennoch wie zuvor beschrieben erfolgen.

Gemäß einem weiteren Aspekt der Erfindung werden die zuvor genannten Schritte des erfindungsgemäßen Verfahrens kontinuierlich wiederholt. Dies kann eine kontinuierliche Anwendung bzw. Umsetzung des erfindungsgemäßen Verfahrens während des Betriebs des Antriebssystems ermöglichen.

Gemäß einem weiteren Aspekt der Erfindung erfolgt das Bestromen der Motorspannung des Stators mittels einer kontinuierlichen Spannung oder mittels Spannungsimpulsen, vorzugsweise mittels PWM-Spannungsimpulsen. Dies kann die entsprechende Umsetzung ermöglichen.

Gemäß einem weiteren Aspekt der Erfindung hängt der vorbestimmte Stromschwellwert des Motorstroms von dem vorbestimmten Vorzeichen der Motorspannung ab. Beispielsweise kann der vorbestimmte Stromschwellwert des Motorstroms 0,3 A oder 0,4 A betragen. In jedem Fall können hierdurch die Möglichkeiten zum Betrieb des Antriebsystems erweitert werden.

Gemäß einem weiteren Aspekt der Erfindung wird das Antriebssystem mit geschlossener Phasenreglerschleife betrieben. Dies kann einen entsprechenden geregelten Betrieb ermöglichen.

Gemäß einem weiteren Aspekt der Erfindung erfolgt das kontinuierliche Erfassen des Motorstroms mittels Messung des Motorphasenstroms. Dies kann eine Möglichkeit darstellen, den Motorstrom kontinuierlich zu erfassen.

Gemäß einem weiteren Aspekt der Erfindung erfolgt das kontinuierliche Erfassen des Motorstroms mittels Messung mit zwei Strommesswiderständen in beiden Phasen eines Wechselrichters. Dies kann eine alternative Möglichkeit darstellen, den Motorstrom kontinuierlich zu erfassen.

Gemäß einem weiteren Aspekt der Erfindung erfolgt das kontinuierliche Erfassen des Motorstroms mittels Messung mit einem Strommesswiderstand eines Gleichspannungszwischenkreises. Dies kann eine alternative Möglichkeit darstellen, den Motorstrom kontinuierlich zu erfassen.

Gemäß einem weiteren Aspekt der Erfindung weist das zuvor beschriebene Verfahren die vorangehenden Schritte auf:
- Ausrichten eines Rotors des Einphasen-Synchronmotors in eine vorbestimmte Ausgangsposition durch Einprägen einer konstanten Motorspannung des Stators, und
- bei erfolgter Ausrichtung, Beenden der konstanten Motorspannung des Stators des Ausrichtens.

Mit anderen Worten kann zu Beginn des Betriebs des Einphasen-Synchronmotors wie zuvor beschrieben, d.h. beim Start des Motors, der Rotor durch das Einprägen einer konstanten Spannung für eine kurze Dauer, beispielsweise ca. 0,5 Sekunden, in eine definierte Anfangsposition ausgerichtet werden. Dann kann die Bestromung, welche beispielsweise seitens einer Brücke erfolgen kann, abgeschaltet werden, damit der Rotor zurück in die (stromlose) Ruheposition kehrt. Dabei ist zu beachten, dass sich die Ruheposition mit und ohne Bestromung aufgrund geometrischer Asymmetrien im Stator unterscheiden. Die Ruheposition ist diejenige des geringsten magnetischen Widerstands.

Gemäß einem weiteren Aspekt der Erfindung erfolgt das Einprägen der konstanten Motorspannung des Stators mittels einer kontinuierlichen Gleichspannung oder mittels Gleichspannungsimpulsen. Dies kann die entsprechende Umsetzung ermöglichen.

Die vorliegende Erfindung betrifft auch ein Antriebssystem mit einem Einphasen-Synchronmotor mit einem Stator und mit einem Rotor und mit einer Schalteinheit, welche ausgebildet ist, den Einphasen-Synchronmotor zu betreiben, wobei die Schalteinheit ferner ausgebildet ist, ein Bestromen des Stators mit einer Motorspannung mit einem vorbestimmten Vorzeichen und ein Beenden des Bestromens durchzuführen, wobei der Einphasen-Synchronmotor ausgebildet ist, einen Motorstrom des Stators und eine induzierte Spannung des Stators zu erfassen, wobei das Antriebssystem, vorzugsweise eine Regelungseinheit des Antriebssystems, ausgebildet ist, ein Verfahren wie zuvor beschrieben auszuführen. Auf diese Art und Weise kann ein Antriebssystem bereitgestellt werden, um das zuvor beschriebene erfindungsgemäße Verfahren umzusetzen, so dass dessen Eigenschaften und Vorteile genutzt werden können.

Die vorliegende Erfindung betrifft auch eine Haushaltsgerätekomponente, vorzugsweise eine Laugenpumpe, eine Kondensatpumpe oder einen Lüfter, mit einem Antriebssystem wie zuvor beschrieben. Auf diese Art und Weise können die Eigenschaften und Vorteile eines erfindungsgemäßen Antriebssystems bei einer Haushaltskomponente genutzt werden.

Die vorliegende Erfindung betrifft auch ein Haushaltsgerät, vorzugsweise eine Waschmaschine oder einen Geschirrspüler, mit einer Haushaltsgerätekomponente wie zuvor beschrieben. Auf diese Art und Weise können die Eigenschaften und Vorteile einer erfindungsgemäßen Haushaltskomponente bei einem Haushaltsgerät genutzt werden.

Ein Ausführungsbeispiel der Erfindung ist in den Zeichnungen rein schematisch dargestellt und wird nachfolgend näher beschrieben. Es zeigt
- Figur 1: eine schematische Darstellung eines erfindungsgemäßen Antriebssystems; und
- Figur 2: ein schematisches Ablaufdiagramm eines erfindungsgemäßen Verfahrens.

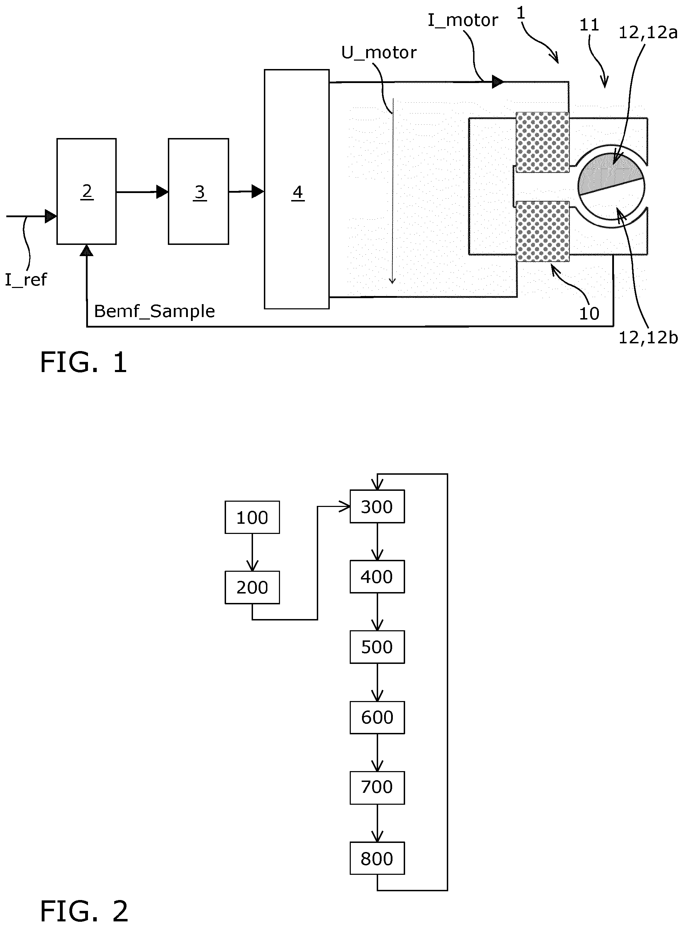

Ein erfindungsgemäßes Antriebssystem 1-4 weist einen Einphasen-Synchronmotor 1 auf, welcher einen Stator 10, auch Ständer 10 genannt, und einen hierzu rotatorisch beweglichen Rotor 11, auch Läufer 11 genannt, besitzt. Der Stator 10 weist elektrisch leitfähige Wicklungen auf (nicht dargestellt), über welche eine Motorspannung U_motor angelegt werden kann, um einen Motorstrom I_motor zu erzeugen. Die Motorspannung U_motor kann über einen Spannungsteiler (nicht dargestellt) abgegriffen werden. Der Rotor 11 weist einen Permanentmagneten 12 mit einem Nordpol 12a und mit einem Südpol 12b auf, siehe Fig. 1.

Eine Regelungseinheit 2 weist einen Eingang auf, über welchen ein veränderlicher Soll-Wert eines Stromschwellwertes I_ref vorgegeben werden kann. Der Stromschwellwert I_ref kann zwischen zwei Werten von beispielsweise 0,3 A und 0,4 A verändert werden. Alternativ können diese Werte auch als zwei Stromschwellwerte I_ref vorgegeben und alternativ zueinander verwenden werden. Ferner wird der Regelungseinheit 2 ein Messwert einer erfassten induzierten Spannung Bemf_Sample zugeführt, welche an dem Stator 10 des Einphasen-Synchronmotors 1 erfasst werden kann, siehe Fig. 1.

Die Regelungseinheit 2 weist einen Phasenregler (nicht dargestellt) auf, welcher zum geregelten Betrieb des Einphasen-Synchronmotors 1 eine Referenzspannung erzeugen kann. Eine Berechnungseinheit 3 erhält als Eingangsgröße die Referenzspannung der Regelungseinheit 2 und erzeugt vier pulsweitenmodulierte Signale (nicht dargestellt), welche einer Schalteinheit 4 zugeführt werden.

Die Schalteinheit 4 ist als H-Brücke (nicht dargestellt) ausgebildet und weist entsprechend vier Schalter auf, welche als Leistungsschalter in Form von vier MOSFETs oder vier IGBTs ausgebildet sein können. Die vier Schalter verbinden eine Gleichspannung mit einem GND- bzw. Massepotenzial und erzeugen ferner die Motorspannung U_motor. Im Bereich des Massepotentials ist ein Shunt zur Umwandlung des Motorstroms I_motor in ein Spannungssignal vorgesehen, so dass der Motorstrom I_motor als Messsignal zur Verfügung gestellt werden kann. Optional kann das Messsignal des Motorstroms I_motor mittels eines Verstärkers verstärkt werden.

Figur 2 zeigt ein schematisches Ablaufdiagramm eines erfindungsgemäßen Verfahrens, welches mit dem erfindungsgemäßen Antriebssystem 1-4 der Figur 1 ausgeführt werden kann.

Bei der Aufnahme des Betriebs des Einphasen-Synchronmotors 1 erfolgt einmalig ein Ausrichten 100 des Rotors 11 des Einphasen-Synchronmotors 1 in eine vorbestimmte Ausgangsposition durch Einprägen einer konstanten Motorspannung des Stators 10. Ist die Ausrichtung erfolgt, so erfolgt ein Beenden 200 der konstanten Motorspannung des Stators 10 des Ausrichtens 100.

Nun erfolgt kontinuierlich bzw. wiederholend ein Bestromen 300 des Stators 10 des Einphasen-Synchronmotors 1 mit einer Motorspannung U_motor mit einem vorbestimmten Vorzeichen, bis der vorbestimmte Stromschwellwert I_ref des Motorstroms I_motor des Stators 10 erreicht ist. Dabei entspricht das vorbestimmte Vorzeichen der Motorspannung U_motor einer gewünschten Drehrichtung des Rotors 11 des Einphasen-Synchronmotors 1.

Es folgt nun ein Beenden 400 des Bestromens 300. Dann erfolgt ein kontinuierliches Erfassen 500 des Motorstroms I_motor des Stators 10. Zum Zeitpunkt des Nulldurchgangs des Motorstroms I_motor erfolgt dann ein Erfassen 600 der induzierten Spannung Bemf_Sample des Stators 10. Es erfolgt nun ein Bestimmen 700 des Vorzeichens der induzierten Spannung Bemf_Sample, und, falls das Vorzeichen der induzierten Spannung Bemf_Sample das entgegengesetzte Vorzeichen des vorbestimmten Vorzeichens der Motorspannung U_motor ist, erfolgt ein Wechseln 800 des vorbestimmten Vorzeichens der Motorspannung U_motor auf das Vorzeichen der induzierten Spannung Bemf_Sample, andernfalls nicht.

### Bezugszeichenliste (Bestandteil der Beschreibung)

- Bemf_Sample: induzierte Spannung (Gegen-EMK; back electromotive force)
- I_ref: Stromschwellwert
- I_motor: Motorstrom
- U_motor: Motorspannung

- 1: Einphasen-Synchronmotor
- 10: Stator; Ständer
- 11: Rotor; Läufer
- 12: Permanentmagnet
- 12a: Nordpol
- 12b: Südpol

- 2: Regelungseinheit

- 3: Berechnungseinheit

- 4: Schalteinheit; H-Brücke

## Patentansprüche

1. Verfahren zum Betrieb eines Antriebssystems (1-4) mit einem Einphasen-Synchronmotor (1) mit wenigstens den Schritten:
Bestromen (300) eines Stators (10) des Einphasen-Synchronmotors (1) durch Anlegen einer Motorspannung (U_motor) mit einem vorbestimmten Vorzeichen, bis ein vorbestimmter Stromschwellwert (I_ref) eines Motorstroms (I_motor) des Stators (10) oder eine vorgegebene Einschaltzeit erreicht ist,
Beenden (400) des Bestromens (300),
kontinuierliches Erfassen (500) des Motorstroms (I_motor) des Stators (10),
im Bereich des Nulldurchgangs des Motorstroms (I_motor), Erfassen (600) einer induzierten Spannung (Bemf_Sample) des Stators (10),
Bestimmen (700) des Vorzeichens der induzierten Spannung (Bemf_Sample), und
**gekennzeichnet durch**,
falls das Vorzeichen der induzierten Spannung (Bemf_Sample) das entgegengesetzte Vorzeichen des vorbestimmten Vorzeichens der Motorspannung (U_motor) ist, Wechseln (800) des vorbestimmten Vorzeichens der Motorspannung (U_motor) auf das Vorzeichen der induzierten Spannung (Bemf_Sample).

2. Verfahren nach Anspruch 1, **dadurch gekennzeichnet, dass**
das vorbestimmte Vorzeichen der Motorspannung (U_motor) einer gewünschten Drehrichtung eines Rotors (11) des Einphasen-Synchronmotors (1) entspricht.

3. Verfahren nach Anspruch 1 oder 2, **dadurch gekennzeichnet, dass**
das Antriebssystem (1-4) keinen Sensor zur Erfassung der Lage eines Rotors (11) des Einphasen-Synchronmotors (1) aufweist.

4. Verfahren nach einem der vorangehenden Ansprüche, **dadurch gekennzeichnet, dass**
die Schritte (300-800) kontinuierlich wiederholt werden.

5. Verfahren nach einem der vorangehenden Ansprüche, **dadurch gekennzeichnet, dass**
das Bestromen (300) der Motorspannung (U_motor) des Stators (10) mittels einer kontinuierlichen Spannung oder mittels Spannungsimpulsen, vorzugsweise mittels PWM-Spannungsimpulsen, erfolgt.

6. Verfahren nach einem der vorangehenden Ansprüche, **dadurch gekennzeichnet, dass**
der vorbestimmte Stromschwellwert (I_ref) des Motorstroms (I_motor) von dem vorbestimmten Vorzeichen der Motorspannung (U_motor) abhängt.

7. Verfahren nach einem der vorangehenden Ansprüche, **dadurch gekennzeichnet, dass**
das Antriebssystem (1-4) mit geschlossener Phasenreglerschleife betrieben wird.

8. Verfahren nach einem der vorangehenden Ansprüche, **dadurch gekennzeichnet, dass**
das kontinuierliche Erfassen (500) des Motorstroms (I_motor) mittels Messung des Motorphasenstroms erfolgt.

9. Verfahren nach einem der vorangehenden Ansprüche, **dadurch gekennzeichnet, dass**
das kontinuierliche Erfassen (500) des Motorstroms (I_motor) mittels Messung mit zwei Strommesswiderständen in beiden Phasen eines Wechselrichters erfolgt.

10. Verfahren nach einem der vorangehenden Ansprüche, **dadurch gekennzeichnet, dass**
das kontinuierliche Erfassen (500) des Motorstroms (I_motor) mittels Messung mit einem Strommesswiderstand eines Gleichspannungszwischenkreises erfolgt.

11. Verfahren nach einem der vorangehenden Ansprüche, **gekennzeichnet durch** die vorangehenden Schritte:
Ausrichten (100) eines Rotors (11) des Einphasen-Synchronmotors (1) in eine vorbestimmte Ausgangsposition durch Einprägen einer konstanten Motorspannung des Stators (10), und
bei erfolgter Ausrichtung, Beenden (200) der konstanten Motorspannung des Stators (10) des Ausrichtens (100).

12. Verfahren nach Anspruch 11, **dadurch gekennzeichnet, dass**
das Einprägen der konstanten Motorspannung des Stators (10) mittels einer kontinuierlichen Gleichspannung oder mittels Gleichspannungsimpulsen erfolgt.

13. Antriebssystem (1-4)
mit einem Einphasen-Synchronmotor (1) mit einem Stator (10) und mit einem Rotor (11), und
mit einer Schalteinheit (4), welche ausgebildet ist, den Einphasen-Synchronmotor (1) zu betreiben,
wobei die Schalteinheit (4) ferner ausgebildet ist, ein Bestromen (300) des Stators (10) durch Anlegen einer Motorspannung (U_motor) mit einem vorbestimmten Vorzeichen und ein Beenden (400) des Bestromens (300) durchzuführen,
wobei der Einphasen-Synchronmotor (1) ausgebildet ist, einen Motorstrom (I_motor) des Stators (10) und eine induzierte Spannung (Bemf_Sample) des Stators (10) zu erfassen,
**dadurch gekennzeichnet, dass** das Antriebssystem (1-4), vorzugsweise eine Regelungseinheit (2) des Antriebssystems (1-4), ausgebildet ist, ein Verfahren nach einem der vorangehenden Ansprüche auszuführen.

14. Haushaltsgerätekomponente, vorzugsweise Laugenpumpe, Kondensatpumpe oder Lüfter,
mit einem Antriebssystem (1-4) nach Anspruch 13.

15. Haushaltsgerät, vorzugsweise Waschmaschine oder Geschirrspüler,
mit einer Haushaltsgerätekomponente nach Anspruch 14.

## Claims

1. Method for operating a drive system (1-4) having a single-phase synchronous motor (1), comprising at least the steps of:
energising (300) a stator (10) of the single-phase synchronous motor (1) by applying a motor voltage (U_motor) having a predetermined polarity sign until a predetermined current threshold (I_ref) of a motor current (I_motor) of the stator (10) or a predetermined switch-on time is reached,
ending (400) the energising (300),
continuously detecting (500) the motor current (I_motor) of the stator (10),
in the region of the zero crossing of the motor current (I_motor), detecting (600) an induced voltage (Bemf_Sample) of the stator (10),
determining (700) the polarity sign of the induced voltage (Bemf_Sample), and
**characterised by,**
if the polarity sign of the induced voltage (Bemf_Sample) is the opposite polarity sign of the predetermined polarity sign of the motor voltage (U_motor), changing (800) the predetermined polarity sign of the motor voltage (U_motor) to the polarity sign of the induced voltage (Bemf_Sample).

2. Method according to claim 1, **characterised in that**
the predetermined polarity sign of the motor voltage (U_motor) corresponds to a desired direction of rotation of a rotor (11) of the single-phase synchronous motor (1).

3. Method according to either claim 1 or claim 2, **characterised in that**
the drive system (1-4) does not have a sensor for detecting the position of a rotor (11) of the single-phase synchronous motor (1).

4. Method according to any of the preceding claims, **characterised in that**
the steps (300-800) are repeated continuously.

5. Method according to any of the preceding claims, **characterised in that**
the motor voltage (U_motor) of the stator (10) is energised (300) by means of a continuous voltage or by means of voltage pulses, preferably by means of PWM voltage pulses.

6. Method according to any of the preceding claims, **characterised in that**
the predetermined current threshold (I_ref) of the motor current (I_motor) depends on the predetermined polarity sign of the motor voltage (U_motor).

7. Method according to any of the preceding claims, **characterised in that**
the drive system (1-4) is operated using a closed phase controller loop.

8. Method according to any of the preceding claims, **characterised in that**
the motor current (I_motor) is continuously detected (500) by measuring the motor phase current.

9. Method according to any of the preceding claims, **characterised in that**
the motor current (I_motor) is continuously detected (500) by means of measurement using two current-measuring resistors in both phases of an inverter.

10. Method according to any of the preceding claims, **characterised in that**
the motor current (I_motor) is continuously detected (500) by means of measurement using a current-measuring resistor of a DC voltage intermediate circuit.

11. Method according to any of the preceding claims, **characterised by** the preceding steps:
aligning (100) a rotor (11) of the single-phase synchronous motor (1) into a predetermined starting position by impressing a constant motor voltage on the stator (10), and
once aligned, ending (200) the constant motor voltage of the stator (10) of the alignment (100).

12. Method according to claim 11, **characterised in that**
the constant motor voltage of the stator (10) is impressed by means of a continuous DC voltage or by means of DC voltage pulses.

13. Drive system (1-4)
comprising a single-phase synchronous motor (1) having a stator (10) and a rotor (11), and
comprising a switching unit (4) which is designed to operate the single-phase synchronous motor (1),
the switching unit (4) being further designed to energise (300) the stator (10) by applying a motor voltage (U_motor) having a predetermined polarity sign and end (400) the energising (300),
the single-phase synchronous motor (1) being designed to detect a motor current (I_motor) of the stator (10) and an induced voltage (Bemf_Sample) of the stator (10),
**characterised in that** the drive system (1-4), preferably a control unit (2) of the drive system (1-4), is designed to carry out a method according to any of the preceding claims.

14. Household appliance component, preferably a drain pump, a condensate pump or a fan,
comprising a drive system (1-4) according to claim 13.

15. Household appliance, preferably a washing machine or a dishwasher,
comprising a household appliance component according to claim 14.

## Revendications

1. Procédé permettant de faire fonctionner un système d'entraînement (1-4) comportant un moteur synchrone monophasé (1) comportant au moins les étapes consistant à :
alimenter électriquement (300) un stator (10) du moteur synchrone monophasé (1) en appliquant une tension de moteur (U_motor) avec un signe prédéterminé jusqu'à ce qu'une valeur seuil de courant (I_ref) prédéterminée d'un courant de moteur (I_motor) du stator (10) ou qu'un temps de mise en circuit prédéfini soit atteint,
mettre fin (400) à l'alimentation électrique (300),
détecter en continu (500) le courant de moteur (I_motor) du stator (10),
dans la plage du passage par zéro du courant de moteur (I_motor), détecter (600) une tension induite (Bemf_Sample) du stator (10),
déterminer (700) le signe de la tension induite (Bemf_Sample), et **caractérisé par,**
si le signe de la tension induite (Bemf_Sample) est le signe opposé au signe prédéterminé de la tension de moteur (U_motor), le changement (800) du signe prédéterminé de la tension de moteur (U_motor) en signe de la tension induite (Bemf_Sample).

2. Procédé selon la revendication 1, **caractérisé en ce que**
le signe prédéterminé de la tension de moteur (U_motor) correspond à un sens de rotation souhaité d'un rotor (11) du moteur synchrone monophasé (1).

3. Procédé selon la revendication 1 ou 2, **caractérisé en ce que**
le système d'entraînement (1-4) ne présente pas de capteur pour la détection de la position d'un rotor (11) du moteur synchrone monophasé (1).

4. Procédé selon l'une des revendications précédentes, **caractérisé en ce que**
les étapes (300-800) sont répétées en continu.

5. Procédé selon l'une des revendications précédentes, **caractérisé en ce que**
l'alimentation électrique (300) de la tension de moteur (U_motor) du stator (10) est effectuée au moyen d'une tension continue ou au moyen d'impulsions de tension, de préférence au moyen d'impulsions de tension à modulation de largeur d'impulsion.

6. Procédé selon l'une des revendications précédentes, **caractérisé en ce que**
la valeur seuil de courant (I_ref) prédéterminée du courant de moteur (I_motor) dépend du signe prédéterminé de la tension de moteur (U_motor).

7. Procédé selon l'une des revendications précédentes, **caractérisé en ce que**
le système d'entraînement (1-4) fonctionne avec une boucle de régulation de phase fermée.

8. Procédé selon l'une des revendications précédentes, **caractérisé en ce que**
la détection continue (500) du courant de moteur (I_motor) est effectuée au moyen de la mesure du courant de phase de moteur.

9. Procédé selon l'une des revendications précédentes, **caractérisé en ce que**
la détection continue (500) du courant de moteur (I_motor) est effectuée au moyen d'une mesure avec deux résistances de mesure de courant dans les deux phases d'un onduleur.

10. Procédé selon l'une des revendications précédentes, **caractérisé en ce que**
la détection continue (500) du courant de moteur (I_motor) est effectuée au moyen d'une mesure avec une résistance de mesure de courant d'un circuit intermédiaire à tension constante.

11. Procédé selon l'une des revendications précédentes, **caractérisé par** les étapes précédentes consistant à :
orienter (100) un rotor (11) du moteur synchrone monophasé (1) dans une position initiale prédéterminée en fournissant une tension de moteur constante du stator (10), et
une fois l'orientation effectuée, mettre fin (200) à la tension de moteur constante du stator (10) de l'orientation (100).

12. Procédé selon la revendication 11, **caractérisé en ce que**
la fourniture de la tension de moteur constante du stator (10) est effectuée au moyen d'une tension constante continue ou au moyen d'impulsions de tension constante.

13. Système d'entraînement (1-4)
comportant un moteur synchrone monophasé (1) comportant un stator (10) et comportant un rotor (11), et
comportant une unité de commutation (4) qui est configurée pour faire fonctionner le moteur synchrone monophasé (1),
dans lequel l'unité de commutation (4) est en outre configurée pour mettre en œuvre une alimentation électrique (300) du stator (10) par application d'une tension de moteur (U_motor) avec un signe prédéterminé, et une fin(400) de l'alimentation électrique (300),
dans lequel le moteur synchrone monophasé (1) est configuré pour détecter un courant de moteur (I_motor) du stator (10) et une tension induite (Bemf_Sample) du stator (10),
**caractérisé en ce que** le système d'entraînement (1-4), de préférence une unité de régulation (2) du système d'entraînement (1-4), est configuré pour mettre en œuvre un procédé selon l'une des revendications précédentes.

14. Composant d'appareil électroménager, de préférence pompe à lessive, pompe à condensat ou soufflante,
comportant un système d'entraînement (1-4) selon la revendication 13.

15. Appareil électroménager, de préférence lave-linge ou lave-vaisselle,
comportant un composant d'appareil électroménager selon la revendication 14.
